# FASCICULE DE BREVET EUROPEEN

(11) **EP 2 919 577 B1**
(45) Date de publication et mention de la délivrance du brevet: **17.05.2017**
(21) Numéro de dépôt: 13789584.3
(22) Date de dépôt: 14.11.2013
(51) Int. Cl.: A01G 1/00, A01G 9/10

(54) **PROCEDE DE PRODUCTION DE VEGETAUX**
VERFAHREN ZUR HERSTELLUNG VON GEMÜSEPFLANZEN
METHOD FOR PRODUCING VEGETABLE PLANTS

(30) Priorité: 19.11.2012 FR 1260952
(43) Date de publication de la demande: 23.09.2015
(73) Titulaire: Batardiere, Laurence, 2720 Briennon (FR)
(72) Inventeur: Batardiere, Laurence, 2720 Briennon (FR)
(74) Mandataire: Ipside
(86) Numéro de dépôt international: PCT/EP2013/073836
(87) Numéro de publication internationale: WO 2014/076186

(56) Documents cités:
- EP-A1- 1 197 137
- WO-A1-2009/071777
- DE-C1- 19 520 823
- DE-U1- 20 214 540
- FR-A1- 2 639 179
- US-B1- 6 405 482

## Description

### Domaine de l'invention

La présente invention se rapporte au domaine de l'agriculture.

La présente invention se rapporte plus particulièrement à un procédé de production de végétaux, plus particulièrement de salades vertes destinées à la consommation.

### Etat de la technique

De nos jours, on consomme en Europe couramment des salades vertes.

Une des difficultés liées à la production et à la consommation actuelles de salades est liée au fait que ces salades sont livrées sur les marchés et dans les magasins, dans un état désolidarisé de la terre.

Avec les modes de production actuels, la salade verte commence à mourir dès l'arrachage. Selon les conditions de stockage et de transport, elle peut commencer à flétrir en quelques heures.

Les Inventeurs de la présente invention ont donc mené des recherches dans le but de produire et commercialiser des salades vertes en pot, notamment afin que la salade verte reste vivante plusieurs jours après sa vente auprès des particuliers.

On connaît dans l'état de la technique des fleurs en pot. On connaît aussi des végétaux en pot, c.f. US 6,405,482 B1. On pourrait imaginer faire pousser la salade dans un pot correspondant à un pot pour fleurs. Toutefois, de grosses racines sortiraient par le ou les trous du fond du pot, et quand on désolidariserait le pot de la terre, la salade recevrait un choc trop important, ce qui la placerait dans un état proche de la mort.

### Exposé de l'invention

La présente invention entend remédier aux inconvénients de l'art antérieur en proposant un procédé permettant de commercialiser des végétaux, notamment des salades vertes destinées à la consommation, en pot.

A cet effet, la présente invention concerne, dans son acception la plus générale, un procédé de production de végétaux, caractérisé en ce qu'il comporte les étapes suivantes :
- Placer dans un pot, dont le fond comporte plus de vingt trous de moins de cinq millimètres de diamètre, trois strates : une strate inférieure composée de terre végétale pauvre en minéraux, une strate intermédiaire composée de terre compostée riche en minéraux, et une strate supérieure composée de sable neutre ; du compost séché issu de matière organique, broyé et passé au tamis, ayant été ajouté sur le dessus de ladite strate intermédiaire ; et
- Faire pousser un plant de végétaux dans ledit pot, ledit pot ayant été posé sur de la terre, cette terre étant plus riche en minéraux que la terre végétale composant ladite strate inférieure.

Ainsi, grâce au procédé selon la présente invention, seules les radicelles du plant de végétaux, et non les grosses racines, peuvent sortir du pot. De plus, la composition en trois strates permet de faire pousser les végétaux en pot, puis de conserver ce plant de végétaux ensuite. Etant donné que la terre composant la strate inférieure est moins riche que la terre à l'extérieur du pot, les racines traversent le fond du pot par les nombreux trous et descendent dans la terre située à l'extérieur du pot. La terre composant la strate intermédiaire est riche afin que des racines se développent à ce niveau. De cette façon, le plant de végétaux reste vivant plusieurs jours une fois qu'on l'a désolidarisé du sol. Le compost séché ajouté rend la strate intermédiaire encore plus riche en minéraux. Au premier arrosage, la poudre de compost va migrer à l'intérieur de la couche intermédiaire, et au deuxième arrosage seulement, elle va se dissoudre dans cette couche et assurer ainsi une réserve nutritive. Les racines du jeune plant vont, par géotropisme positif, tout en migrant vers le bas, développer des racines dans la couche intermédiaire, traverser rapidement la strate inférieure peu minéralisée, pour atteindre la terre qui est plus nutritive et qui assure la croissance de la plante. A ce stade, le développement des racines dans la strate intermédiaire est stoppé, donc cette couche n'est pas épuisée en réserves nutritives. Quand le contact au sol est supprimé, la salade va pouvoir à nouveau se nourrir dans la strate intermédiaire enrichie par la dissolution progressive de la poudre de compost, pour se maintenir en vie, car il n'y a plus de croissance. Il suffit juste de couvrir les besoins d'entretien, avec un peu d'eau et de sels minéraux.

En particulier, le procédé selon la présente invention permet d'accroître considérablement la durée de conservation des salades vertes. La salade conserve toutes ses qualités organoleptiques, ses minéraux et ses vitamines. De plus, le consommateur peut, grâce à ce procédé, consommer sa salade feuille par feuille, ce qui est particulièrement intéressant pour un foyer composé d'une ou deux personnes. Le consommateur trouve une qualité de produit encore meilleure que celle procurée par une salade cultivée dans son propre potager : même fraicheur, même goût que la salade qui vient d'être cueillie, mais en plus les feuilles ne sont pas en contact avec le sol, donc il y a moins d'attaque de parasites, pas de pourriture, pas de boue et donc pas de perte. La salade est propre et saine consommable presque à 100 %, et cela obtenu naturellement sans utilisation de produits phytosanitaires. Elle ne demande pas de préparation. En effet, un simple rinçage suffit.

Une fois le pot mis en place, très peu d'intervention, peu ou pas de traitement, et très peu d'arrosage sont nécessaire (ce qui entraîne également une économie d'eau).

Il y a très peu de perte par pied de salade, mais également au niveau de la production. Il n'y a pas de gaspillage. La quasi-totalité de la production arrive dans l'assiette du consommateur, ce qui est loin d'être le cas en culture traditionnelle.

Selon un mode de réalisation, ledit pot est en amidon de maïs.

Avantageusement, ledit pot est en amidon de maïs non OGM (Organisme Génétiquement Modifié).

Selon une variante, ledit pot est en plastique recyclé.

Selon un mode de réalisation, le sable composant ladite strate supérieure est du sable de carrière.

Selon un mode de réalisation, le sable composant ladite strate supérieure est du sable de gravière.

Les sables de carrière et de gravière ont pour caractéristiques d'être neutres, non pollués et anti mauvaises herbes. On n'utilise pas de sable de rivière qui est pollué et contient des graines capables de se développer dans le pot au détriment du plant de salade.

De préférence, ledit pot comporte des rainures correspondant à la séparation entre les différentes strates.

Ces rainures permettent un remplissage aisé du pot pour une personne voyant normalement ou une personne malvoyante.

De préférence, ledit procédé est appliqué à la production de salades vertes destinées à la consommation.

Avantageusement, ledit compost séché est réalisé à partir de fumier de cheval.

De préférence, le pH dudit compost séché est compris entre six et huit.

Selon un mode de réalisation, le taux d'humidité dudit compost séché est sensiblement égal à 14 %.

De préférence, ledit pot comporte entre cinquante et cent trous.

Avantageusement, chacune des trois strates : inférieure, intermédiaire et supérieure, occupe chacune sensiblement un tiers du pot.

De préférence, ledit compost séché issu de matière organique, ajouté à ladite strate intermédiaire est riche en phosphore, en potassium et en magnésium.

Selon un mode de réalisation, ledit pot a une hauteur comprise entre huit et quinze centimètre et un rayon compris entre cinq et huit centimètres au niveau de la partie supérieure.

Avantageusement, ledit pot comporte une réserve d'eau.

Ceci permet au plant de végétaux de mieux supporter le transport et le stockage.

### Brève description des dessins

On comprendra mieux l'invention à l'aide de la description, faite ci-après à titre purement explicatif, d'un mode de réalisation de l'invention, en référence aux Figures dans lesquelles :
- la Figure 1 illustre les différentes étapes du procédé selon la présente invention ;
- la Figure 2 représente les différentes strates ainsi que le pot, mis en oeuvre dans le procédé selon la présente invention ; et
- les Figure 3 et 4 illustrent le pot mis en oeuvre dans le procédé selon la présente invention.

### Description détaillée des modes de réalisation de l'invention

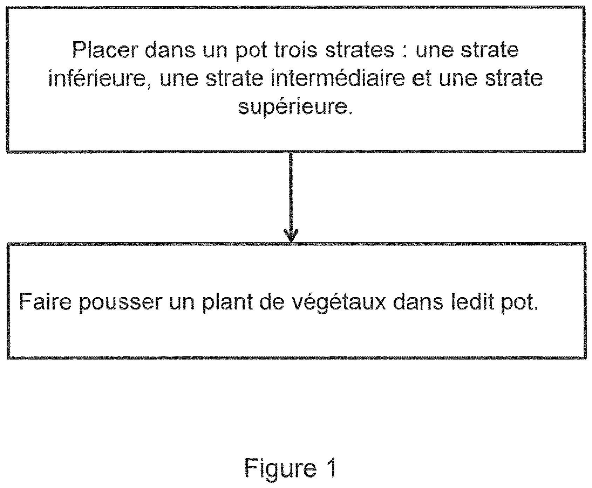

Le procédé de production de végétaux selon la présente invention est représenté Figure 1.

Ledit procédé comporte les étapes suivantes :
- Placer dans un pot 10, dont le fond comporte plus de vingt trous 11, 12, 13 de moins de cinq millimètres de diamètre, trois strates : une strate inférieure 20 composée de terre végétale pauvre en minéraux, une strate intermédiaire 30 composée de terre compostée riche en minéraux, et une strate supérieure 40 composée de sable neutre ; du compost séché issu de matière organique, broyé et passé au tamis, ayant été ajouté sur le dessus de ladite strate intermédiaire 30 ; et
- Faire pousser un plant 40 de végétaux dans ledit pot 10, ledit pot 10 ayant été posé sur de la terre, cette terre étant plus riche en minéraux que la terre végétale composant ladite strate inférieure 20.

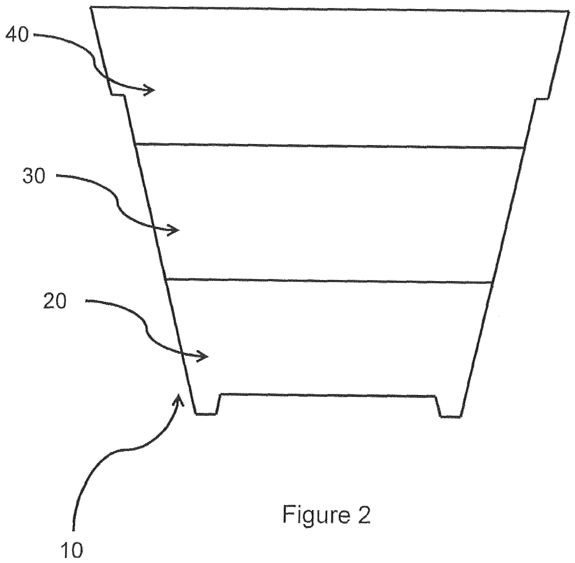

La Figure 2 représente le pot 10 et les différentes strates: la strate inférieure 20 composée de terre végétale pauvre en minéraux, la strate intermédiaire 30 composée de terre compostée riche en minéraux, et la strate supérieure 40 composée de sable neutre.

Le sable composant la strate supérieure 40 est du sable neutre, non pollué et anti mauvaises herbes. C'est par exemple du sable de carrière ou du sable de gravière.

De préférence, chacune des trois strates : inférieure 20, intermédiaire 30 et supérieure 40, occupe chacune sensiblement un tiers du pot 10.

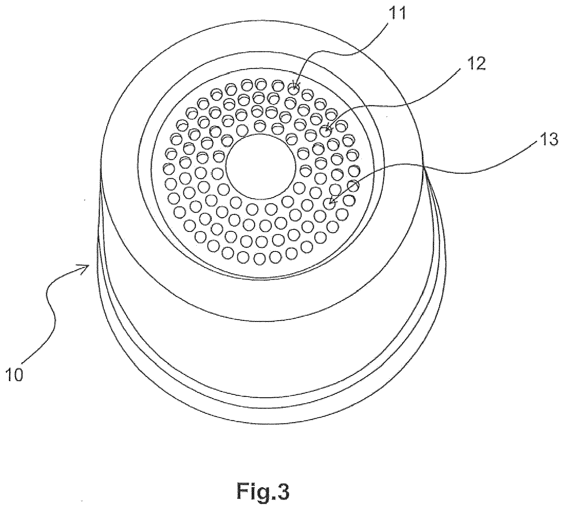

La Figure 3 illustre le pot 10. On voit sur cette Figure les trous 11, 12 et 13 au fond du pot 10. Le fond du pot 10 comporte plus de vingt trous de moins de cinq millimètres de diamètre. Dans un mode de réalisation, le pot 10 comporte entre soixante et quatre-vingt trous.

Dans un mode de mise en oeuvre, ledit pot comporte une réserve d'eau.

Selon un mode de réalisation, ledit pot 10 a une hauteur comprise entre huit et quinze centimètre et un rayon compris entre cinq et huit centimètres au niveau de la partie supérieure.

La partie centrale du fond du pot est pleine.

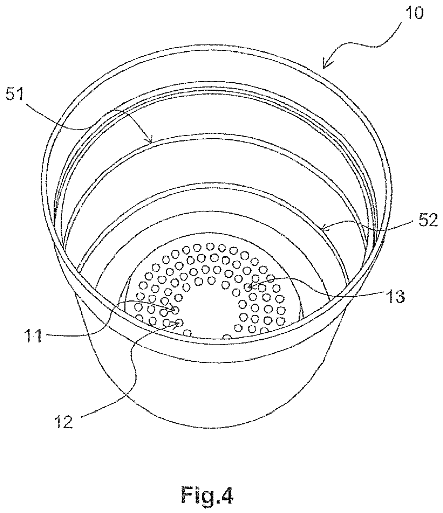

La Figure 4 représente également le pot 10, sous un angle de vue différent. Cette Figure 4 montre des rainures 51 et 52, qui permettent de séparer les différentes strates 20, 30 et 40. Ces rainures 51 et 52 permettent un remplissage aisé du pot 10, par des personnes voyant normalement ou bien par des personnes malvoyantes.

Dans un mode de réalisation, le pot 10 est en amidon de maïs, de préférence non OGM (Organisme Génétiquement Modifié).

Dans un autre mode de réalisation, le pot 10 est en plastique recyclé.

On sèche et on tamise le compost car, comme on a une terre riche à la strate intermédiaire et une terre pauvre à la strate inférieure, lors du premier arrosage, l'eau va s'écouler et va gorger d'eau les petites poudres constituées par le compost séché. Lors du second arrosage, les petites poudres initialement constituées par le compost séché et gorgées d'eau vont descendre dans la strate inférieure, ce qui fait qu'on obtient une terre riche dans tout le pot. Ainsi, on obtient des radicelles dans tout le pot.

De préférence, ce compost séché est réalisé à partir de fumier de cheval ; son pH est compris entre six et huit, et son taux d'humidité est sensiblement égal à 14 %.

Ce compost séché issu de matière organique, ajouté à ladite strate intermédiaire est riche en phosphore, en potassium et en magnésium.

Grâce au procédé selon la présente invention, le plant de végétaux pousse en pleine terre, et se conserve en pot ensuite. Le procédé selon la présente invention permet d'obtenir la certification « Bio ».

Le procédé selon la présente invention s'applique plus particulièrement aux salades vertes, mais on peut l'appliquer à d'autres types de végétaux, comme par exemple du thym, du basilic ou du romarin.

Le procédé selon la présente invention permet également de faire pousser des anciennes variétés de salades vertes, par exemple les laitues Icaro ou les laitues oreille de diable, qui ne sont plus cultivées de nos jours en raison de leur faible résistance. Ceci permet d'apporter une variété plus grande de goûts et de textures sur les tables des consommateurs particuliers et des restaurants.

## Revendications

1. Procédé de production de végétaux, **caractérisé en ce qu'**il comporte les étapes suivantes :
• Placer dans un pot (10), dont le fond comporte plus de vingt trous (11, 12, 13) de moins de cinq millimètres de diamètre, trois strates : une strate inférieure (20) composée de terre végétale pauvre en minéraux, une strate intermédiaire (30) composée de terre compostée riche en minéraux, et une strate supérieure (40) composée de sable neutre ; du compost séché issu de matière organique, broyé et passé au tamis, ayant été ajouté sur le dessus de ladite strate intermédiaire (30) ; et
• Faire pousser un plant (60) de végétaux dans ledit pot (10), ledit pot (10) ayant été posé sur de la terre, cette terre étant plus riche en minéraux que la terre végétale composant ladite strate inférieure (20).

2. Procédé de production de végétaux selon la revendication 1, **caractérisé en ce que** ledit pot (10) est en amidon de maïs.

3. Procédé de production de végétaux selon la revendication 2, **caractérisé en ce que** ledit pot (10) est en amidon de maïs non OGM (Organisme Génétiquement Modifié).

4. Procédé de production de végétaux selon la revendication 1, **caractérisé en ce que** ledit pot (10) est en plastique recyclé.

5. Procédé de production de végétaux selon l'une au moins des revendications précédentes, **caractérisé en ce que** le sable composant ladite strate supérieure (40) est du sable de carrière.

6. Procédé de production de végétaux selon l'une au moins des revendications 1 à 4, **caractérisé en ce que** le sable composant ladite strate supérieure (40) est du sable de gravière.

7. Procédé de production de végétaux selon l'une au moins des revendications précédentes, **caractérisé en ce que** ledit pot (10) comporte des rainures (51, 52) correspondant à la séparation entre les différentes strates (20, 30, 40).

8. Procédé de production de végétaux selon l'une au moins des revendications précédentes, **caractérisé en ce qu'**il est appliqué à la production de salades vertes destinées à la consommation.

9. Procédé de production de végétaux selon l'une au moins des revendications précédentes, **caractérisé en ce que** ledit compost séché est réalisé à partir de fumier de cheval.

10. Procédé de production de végétaux selon l'une au moins des revendications précédentes, **caractérisé en ce que** le pH dudit compost séché est compris entre six et huit.

11. Procédé de production de végétaux selon l'une au moins des revendications précédentes, **caractérisé en ce que** le taux d'humidité dudit compost séché est sensiblement égal à 14 %.

12. Procédé de production de végétaux selon l'une au moins des revendications précédentes, **caractérisé en ce que** ledit pot (10) comporte entre cinquante et cent trous (11, 12, 13).

13. Procédé de production de végétaux selon l'une au moins des revendications précédentes, **caractérisé en ce que** chacune des trois strates : inférieure (20), intermédiaire (30) et supérieure (40), occupe chacune sensiblement un tiers du pot.

14. Procédé de production de végétaux selon l'une au moins des revendications précédentes, **caractérisé en ce que** ledit compost séché issu de matière organique, ajouté à ladite strate intermédiaire est riche en phosphore, en potassium et en magnésium.

15. Procédé de production de végétaux selon l'une au moins des revendications précédentes, **caractérisé en ce que** ledit pot (10) a une hauteur comprise entre huit et quinze centimètre et un rayon compris entre cinq et huit centimètres au niveau de la partie supérieure.

16. Procédé de production de végétaux selon l'une au moins des revendications précédentes, **caractérisé en ce que** ledit pot (10) comporte une réserve d'eau.

## Patentansprüche

1. Verfahren zur Produktion von Pflanzen, **dadurch gekennzeichnet, dass** man in den folgenden Schritten:
• in einen Topf (10), dessen Boden mehr als zwanzig Löcher (11, 12, 13) mit weniger als fünf Millimetern Durchmesser umfasst, drei Schichten überführt: eine untere Schicht (20), die aus mineralstoffarmem Mutterboden besteht, eine Zwischenschicht (30), die aus mineralstoffreicher kompostierter Erde besteht, und eine obere Schicht (40), die aus neutralem Sand besteht; wobei man aus organischen Substanzen herrührenden getrockneten Kompost, der zerkleinert und gesiebt wurde, oben auf die Zwischenschicht (30) hinzugefügt hat; und
• einen Pflanzensetzling (60) in dem Topf (10) wachsen lässt, wobei der Topf (10) auf Erde platziert worden ist, die mineralstoffreicher ist als der Mutterboden, der die untere Schicht (20) bildet.

2. Verfahren zur Produktion von Pflanzen nach Anspruch 1, **dadurch gekennzeichnet, dass** der Topf (10) aus Maisstärke besteht.

3. Verfahren zur Produktion von Pflanzen nach Anspruch 2, **dadurch gekennzeichnet, dass** der Topf (10) aus Nicht-GMO(genetisch modifizierter Organismus)-Maisstärke besteht.

4. Verfahren zur Produktion von Pflanzen nach Anspruch 1, **dadurch gekennzeichnet, dass** der Topf (10) aus Recyclingkunststoff besteht.

5. Verfahren zur Produktion von Pflanzen nach mindestens einem der vorhergehenden Ansprüche, **dadurch gekennzeichnet, dass** der Sand, der die obere Schicht (40) bildet, Sandgrubensand ist.

6. Verfahren zur Produktion von Pflanzen nach mindestens einem der Ansprüche 1 bis 4, **dadurch gekennzeichnet, dass** der Sand, der die obere Schicht (40) bildet, Kiesgrubensand ist.

7. Verfahren zur Produktion von Pflanzen nach mindestens einem der vorhergehenden Ansprüche, **dadurch gekennzeichnet, dass** Topf (10) Rillen (51, 52) enthält, die der Trennung zwischen den verschiedenen Schichten (20, 30, 40) entsprechen.

8. Verfahren zur Produktion von Pflanzen nach mindestens einem der vorhergehenden Ansprüche, **dadurch gekennzeichnet, dass** es auf die Produktion von zum Verzehr bestimmtem grünem Salat angewendet wird.

9. Verfahren zur Produktion von Pflanzen nach mindestens einem der vorhergehenden Ansprüche, **dadurch gekennzeichnet, dass** der getrocknete Kompost aus Pferdemist hergestellt wird.

10. Verfahren zur Produktion von Pflanzen nach mindestens einem der vorhergehenden Ansprüche, **dadurch gekennzeichnet, dass** der pH-Wert des getrockneten Komposts zwischen sechs und acht beträgt.

11. Verfahren zur Produktion von Pflanzen nach mindestens einem der vorhergehenden Ansprüche, **dadurch gekennzeichnet, dass** der Feuchtigkeitsgehalt des getrockneten Komposts im Wesentlichen gleich 14% ist.

12. Verfahren zur Produktion von Pflanzen nach mindestens einem der vorhergehenden Ansprüche, **dadurch gekennzeichnet, dass** Topf (10) zwischen fünfzig und hundert Löcher (11, 12, 13) enthält.

13. Verfahren zur Produktion von Pflanzen nach mindestens einem der vorhergehenden Ansprüche, **dadurch gekennzeichnet, dass** jede der drei Schichten: die untere (20), die Zwischenschicht (30) und die obere (40), im Wesentlichen jeweils ein Drittel des Topfs einnimmt.

14. Verfahren zur Produktion von Pflanzen nach mindestens einem der vorhergehenden Ansprüche, dass der von organischer Substanz herrührende getrocknete Kompost, der zu der Zwischenschicht hinzugefügt wird, reich an Phosphor, Kalium und Magnesium ist.

15. Verfahren zur Produktion von Pflanzen nach mindestens einem der vorhergehenden Ansprüche, **dadurch gekennzeichnet, dass** der Topf (10) eine Höhe zwischen acht und fünfzehn Zentimetern und einen Radius zwischen fünf und acht Zentimetern an der Oberseite besitzt.

16. Verfahren zur Produktion von Pflanzen nach mindestens einem der vorhergehenden Ansprüche, **dadurch gekennzeichnet, dass** der Topf (10) einen Wasservorrat umfasst.

## Claims

1. Method for producing vegetable plants, **characterized in that** it comprises the following steps:
• placing in a pot (10), the bottom of which comprises more than twenty holes (11, 12, 13) less than five millimetres in diameter, three layers: a lower layer (20) composed of topsoil with a low mineral content, an intermediate layer (30) composed of compost with a high mineral content, and an upper layer (40) composed of neutral sand; dried compost derived from organic matter ground and passed through a sieve having been added to the top of said intermediate layer (30); and
• growing a vegetable plant seedling (60) in said pot (10), said pot (10) having been placed on soil, this soil having a higher mineral content than the topsoil composing said lower layer (20).

2. Method for producing vegetable plants according to Claim 1, **characterized in that** said pot (10) is made of corn starch.

3. Method for producing vegetable plants according to Claim 2, **characterized in that** said pot (10) is made of non-GMO (genetically modified organism) corn starch.

4. Method for producing vegetable plants according to Claim 1, **characterized in that** said pot (10) is made of recycled plastic.

5. Method for producing vegetable plants according to at least one of the preceding claims, **characterized in that** the sand composing said upper layer (40) is quarry sand.

6. Method for producing vegetable plants according to at least one of Claims 1 to 4, **characterized in that** the sand composing said upper layer (40) is gravel sand.

7. Method for producing vegetable plants according to at least one of the preceding claims, **characterized in that** said pot (10) comprises grooves (51, 52) corresponding to the separation between the different layers (20, 30, 40).

8. Method for producing vegetable plants according to at least one of the preceding claims, **characterized in that** it is applied to the production of lettuce intended for consumption.

9. Method for producing vegetable plants according to at least one of the preceding claims, **characterized in that** said dried compost is produced from horse manure.

10. Method for producing vegetable plants according to at least one of the preceding claims, **characterized in that** the pH of said dried compost is between six and eight.

11. Method for producing vegetable plants according to at least one of the preceding claims, **characterized in that** the moisture content of said dried compost is substantially equal to 14%.

12. Method for producing vegetable plants according to at least one of the preceding claims, **characterized in that** said pot (10) comprises between fifty and one hundred holes (11, 12, 13).

13. Method for producing vegetable plants according to at least one of the preceding claims, **characterized in that** the three layers- lower (20), intermediate (30) and upper (40)- each occupy substantially one third of the pot.

14. Method for producing vegetable plants according to at least one of the preceding claims, **characterized in that** said dried compost, derived from organic matter and added to said intermediate layer, has a high content of phosphorus, potassium and magnesium.

15. Method for producing vegetable plants according to at least one of the preceding claims, **characterized in that** said pot (10) is between eight and fifteen centimetres tall and has a radius of between five and eight centimetres at the upper portion.

16. Method for producing vegetable plants according to at least one of the preceding claims, **characterized in that** said pot (10) comprises a reserve of water.
